(19) Europäisches Patentamt
European Patent Office
Office européen des brevets

(11) EP 2 274 339 B1

(12) EUROPÄISCHE PATENTSCHRIFT

(45) Veröffentlichungstag und Bekanntmachung des Hinweises auf die Patenterteilung:
11.11.2015 Patentblatt 2015/46

(21) Anmeldenummer: 09738230.3

(22) Anmeldetag: 30.04.2009

(51) Int Cl.:
C08F 2/00 (2006.01)    C08F 20/00 (2006.01)
C08F 20/06 (2006.01)

(86) Internationale Anmeldenummer:
PCT/EP2009/055296

(87) Internationale Veröffentlichungsnummer:
WO 2009/133186 (05.11.2009 Gazette 2009/45)

(54) **VERFAHREN UND VORRICHTUNG ZUR KONTINUIERLICHEN HERSTELLUNG VON POLYMERISATEN DURCH RADIKALISCHE POLYMERISATION**

METHOD AND DEVICE FOR THE CONTINUOUS PRODUCTION OF POLYMERS BY RADICAL POLYMERIZATION

PROCÉDÉ ET DISPOSITIF POUR LA FABRICATION EN CONTINU DE POLYMÈRES PAR POLYMÉRISATION RADICALAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **02.05.2008 EP 08155607**

(43) Veröffentlichungstag der Anmeldung:
**19.01.2011 Patentblatt 2011/03**

(73) Patentinhaber: **BASF SE**
**67056 Ludwigshafen (DE)**

(72) Erfinder:
• **MATTMANN, Wolfgang**
**67117 Limburgerhof (DE)**
• **LOTH, Wolfgang**
**67098 Bad Dürkheim (DE)**
• **URTEL, Bolette**
**67240 Bobenheim-Roxheim (DE)**
• **GÜTLICH-HAUK, Elke**
**67245 Lambsheim (DE)**
• **WEIDL, Christian Hubert**
**67346 Speyer (DE)**
• **DAISS, Andreas**
**67146 Deidesheim (DE)**

(56) Entgegenhaltungen:
**DE-A1- 19 816 886    DE-A1- 19 920 794**

**Beschreibung**

Die vorliegende Erfindung betrifft ein Verfahren zur kontinuierlichen Herstellung eines Polymerisats durch radikalische Polymerisation, bei dem mindestens drei Einsatzstoffe in einem oder mehreren Mischern mit Mikrostrukturen vermischt und anschließend in wenigstens einer Reaktionszone polymerisiert werden.

Die WO 99/54362 beschreibt ein Verfahren zur kontinuierlichen Herstellung von Polymerisaten, bei dem mindestens zwei Reaktionspartner durch einen Mikromischer hindurch- und zusammengeführt, miteinander vermischt und anschließend in einem Rohrreaktor polymerisiert werden. Dabei werden die Ausgangsstoffe soweit vorgewärmt, dass sie nach dem Eintritt in den Mikromischer die erforderliche Reaktionstemperatur erreichen. Durch diese Vorgehensweise soll die Bildung von Polymerisaten mit einer bimodalen Molmassenverteilung und hochmolekularen Anteilen vermieden werden, die zu einer Verstopfung bzw. Belegung des Reaktorsystems führen können. Diese Vorgehensweise ist nicht nur energieaufwändig, sondern es muss auch mit einem undefinierten Vorumsatz im Mischer gerechnet werden. Zudem treten bei säuregruppenhaltigen Monomeren sowie bei den hohen Reaktionstemperaturen, wie sie zur Herstellung von niedermolekularen Produkten erforderlichen sind, verstärkt Korrosionsprobleme auf. Außerdem kann es auch bei einem kurzfristigen Ausfall eines Zulaufs oder bei einem Abfall des Durchflusses bereits im Mischer aufgrund der Vorwärmung zu Polymerisation und damit auch zu einer Verstopfung des Mikromischers kommen.

Die WO 03/037501 offenbart ein Verfahren zur (Co-)Polymerisation von olefinisch ungesättigten Monomeren, bei dem mindestens zwei Ausgangsstoffe in Form zweier flüssiger Stoffströme in entgegengesetzter Richtung in einem Mischer mit ineinander greifenden Mikrokanälen vor ihrem Eintritt in ein Reaktionsgefäß vermischt werden. Aufgrund der eingesetzten Kanaldimensionen mit Querschnitten im Bereich 10 bis 100 $\mu$m besteht auch bei diesem Verfahren die Gefahr der Belegung oder Verstopfung von Mischer und/oder Reaktor. Dies ist problematisch, da Vorrichtungen mit Mikrostrukturen generell auch zu Reinigungszwecken schlecht zugänglich sind.

Das Dokument DE 198 16 886 betrifft ein Verfahren und eine Vorrichtung zur kontinuierlichen Herstellung von Polymerisaten, bei dem mindestens zwei Reaktionspartner durch einen Mikromischer miteinander vermischt werden.

Die Aufgabe der vorliegenden Erfindung besteht also darin, ein Verfahren für die kontinuierliche Herstellung von radikalischen Polymerisaten zur Verfügung zu stellen, so dass sie die aus dem Stand der Technik bekannten Nachteile vermeidet. Speziell soll das Verfahren die Herstellung von Lösungspolymerisaten mit einer definierten, möglichst engen Molmassenverteilung ermöglichen, energieeffizient sein, d.h. eine Vorwärmung obsolet macht, in einer Vorrichtung erfolgen, die keine Verstopfungsgefahr für den Mikromischers und/oder den Reaktor beinhaltet und/oder beim Einsatz säuregruppenhaltiger Monomere Korrosionsprobleme möglichst vermeidet. Speziell soll auf extrem teure Sonderwerkstoffe verzichtet werden können.

Erfindungsgemäß wird diese Aufgabe durch ein Verfahren zur kontinuierlichen Herstellung eines Polymerisats durch radikalische Polymerisation gelöst, das folgende Schritte umfasst:

(a) Bereitstellen von wenigstens zwei flüssigen Strömen, wobei die wenigstens zwei flüssigen Ströme jeweils eine oder mehrere der folgenden Komponenten umfassen:

ein radikalisch polymerisierbares Monomer,

einen Regler ausgewählt unter als Regler wirkenden Lösungsmitteln und davon verschiedenen Reglern und

einen Initiator,

mit der Maßgabe, dass der den Initiator enthaltende Strom nicht auch den Regler enthält.

(b) Vermischen der wenigstens zwei flüssigen Ströme unter Erhalt eines Reaktionsgemisches, wobei das Vermischen der flüssigen Ströme mindestens 20°C unterhalb der Reaktionstemperatur der nachfolgenden Polymerisation erfolgt und wobei wenigstens ein Mischer mit Mikrostrukturen eingesetzt wird, und

(c) radikalische Polymerisation des in Schritt (b) erhaltenen Reaktionsgemisches in wenigstens einer mikrastrukturierten Reaktionszone mit einen charakteristischen Dimension von höchstens 4 mm.

Im Rahmen der vorliegenden Erfindung bezieht sich der Ausdruck "flüssiger Strom" auf den Strom an sich und nicht den Aggregatzustand jeder einzelnen Komponent des Stroms. d.h. wenn eine der Komponenten bei den gegebenen Druck- und Temperaturbedingungen der Schritte (a), (b) und (c) nicht in flüssigem Zustand vorliegt, kann sie in einem Lösungsmittel gelöst vorliegen. Im Rahmen der vorliegenden Erfindung wird unter einem flüssigen Strom sowohl ein unter den gegebenen Druck- und Temperaturbedingungen flüssig vorliegender Stoff als auch eine Schmelze oder ein in einem flüssigen Lösungsmittel gelöster Feststoff verstanden.

In einer geeigneten Ausführung werden dabei in Schritt (a) die folgenden Ströme bereit gestellt:

(1) wenigstens ein flüssiger Strom, der mindestens ein radikalisch polymerisierbares Monomer enthält,

(2) wenigstens ein flüssiger Strom, der mindestens einen Initiator enthält, und

(3) wenigstens ein flüssiger Strom, der mindestens einen Regler enthält.

Auch bei der letztgenannten Ausführung gilt die Maßgabe, dass der den Initiator enthaltende Strom nicht auch den Regler (und somit auch kein als Regler wirksames Lösungsmittel) enthält.

Das Vermischen der flüssigen Ströme erfolgt mindestens 20°C unterhalb der Reaktionstemperatur der nachfolgenden Polymerisation. Insbesondere werden die flüssigen Ströme ohne Vorwärmung vermischt. Vorzugsweise erfolgt das Vermischen dann etwa bei Umgebungstemperatur (23 °C) oder darunter, z.B. im Bereich von 10 °C bis 30 °C. Die Reaktionstemperatur wird dabei als die Temperatur definiert, bei der die Polymerisation in der Reaktionszone durchgeführt wird. Handelt es sich um ein Temperaturintervall, so ist die niedrigste in der Reaktionszone eingestellte Temperatur gemeint. Dadurch kann eine vorzeitige Initiierung des Reaktionsgemisches während des Mischvorgangs vermieden und ein definierter Reaktionsstart und definierte Verweilzeiten in der nachfolgenden Polymerisation erhalten werden. Darüber hinaus vermeidet dieses Verfahren durch unkontrollierte Reaktion hervorgerufene Polymerbildung und Verstopfung von Misch- und Reaktionsapparaten.

In einer ersten bevorzugten Ausführungsform erfolgt das Vermischen der flüssigen Ströme einstufig in einem Mischer mit Mikrostrukturen.

In einer anderen, bevorzugten Ausführungsform erfolgt das Vermischen der flüssigen Ströme mehrstufig, wobei zumindest der in Strömungsrichtung letzte Mischer vor Eintritt in die Reaktionszone(n) ein Mischer mit Mikrostrukturen ist.

In einer weiteren bevorzugten Ausführungsform ist in der wenigstens einen Reaktionszone das Produkt aus Wärmeübergangskoeffizient und volumenspezifischer Wärmeübertragungsfläche größer als 12500 W/m$^3$K, bevorzugt größer als 50000 W/m$^3$K, besonders bevorzugt größer als 200000 W/m$^3$K und insbesondere größer als 800000 W/m$^3$K.

Die Polymerisation kann einstufig oder in zwei oder mehr als zwei, d.h. in 2, 3, 4, 5 oder mehr Stufen, erfolgen.

In einer geeigneten Ausführungsform wird im Falle einer mehrstufigen Polymerisation zwischen wenigstens zwei der Polymerisationsstufen wenigstens ein zusätzlicher Strom (beispielsweise ein, zwei, drei, vier oder fünf Ströme) zugemischt. Dabei kann es sich um einen monomerhaltigen Strom, initiatorhaltigen Strom, lösungsmittelhaltigen Strom, reglerhaltigen Strom, eine Mischung daraus und/oder um einen beliebigen anderen Stoffstrom handeln.

In einer geeigneten Ausführungsform wird/werden dabei der/die zusätzliche(n) Strom/Ströme über einen Mischer mit Mikrostrukturen zugemischt. In einer ebenfalls geeigneten Ausführungsform wird zum Vermischen dieses zusätzlichen Stroms bzw. dieser zusätzlichen Ströme und für die weitere Reaktion wenigstens ein Reaktor mit Mischfunktion eingesetzt.

In einer weiteren, geeigneten Ausführungsform wird der Reaktionsaustrag einer Nachbehandlung unterzogen. Diese ist unter Postpolymerisation, Desodorierung, Neutralisation, einer davon verschiedenen Additivierung und Kombinationen davon ausgewählt.

In einer anderen geeigneten Ausführungsform gibt man dem Reaktionsaustrag wenigstens ein Additiv zu. In einer speziellen Ausführungsform wird zur Nachbehandlung mindestens ein Additiv mit dem Reaktionsaustrag unter Einsatz eines Mischers mit Mikrostrukturen vermischt.

Bevorzugt erfolgt die radikalische Polymerisation als Lösungspolymerisation oder Massepolymerisation. Besonders bevorzugt ist die Lösungspolymerisation.

In einer besonders geeigneten Ausführungsform wird zur Polymerisation als Monomer eine monoethylenisch ungesättigte Carbon- oder Sulfonsäure oder ein Monomergemisch, das wenigstens eine monoethylenisch ungesättigte Carbon- oder Sulfonsäure enthält, eingesetzt.

In der vorliegenden Erfindung ist weiterhin eine Vorrichtung zur kontinuierlichen Herstellung von Polymeren verwendet, die

- wenigstens zwei Vorlagebehälter für flüssige Ausgangsstoffe,

- je eine Zuführung für die flüssigen Ströme aus den wenigstens zwei Vorlagebehältern,

- einen oder mehrere hintereinander geschalte Mischer, dem/denen die flüssigen Ströme zugeführt und in denen sie unter Erhalt eines Reaktionsgemisches vermischt werden, wobei zumindest der in Stromrichtung letzte Mischer vor Eintritt in die Reaktionszone(n) mit Mikrostrukturen ausgestattet ist,

- wenigstens eine mikrostrukturierte Reaktionszone, und

- einen Austragsbehälter, der gegebenenfalls mit einer oder mehreren Zugabe- und/oder Mischvorrichtungen versehen ist,

umfasst.

In einer alternativen Ausführung umfasst diese Vorrichtung

- wenigstens drei Vorlagebehälter für flüssige Ausgangsstoffe,

- je eine Zuführung für die flüssigen Ströme aus den wenigstens drei Vorlagebehältern,

- einen oder mehrere hintereinander geschalte Mischer, dem/denen die flüssigen Ströme zugeführt und in denen sie unter Erhalt eines Reaktionsgemisches vermischt werden, wobei zumindest der in Stromrichtung letzte Mischer vor Eintritt in die Reaktionszone(n) mit Mikrostrukturen ausgestattet ist,

- wenigstens eine Reaktionszone, und

- einen Austragsbehälter, der gegebenenfalls mit einer oder mehreren Zugabe- und/oder Mischvorrichtungen versehen ist.

In der Vorrichtung wird wenigstens eine mikrostrukturierte Reaktionszone eingesetzt.
In einer anderen geeigneten Ausführung umfasst die Vorrichtung zwei Reaktionszonen.
In einer ebenfalls geeigneten Ausführung weist die Vorrichtung wenigstens eine weitere Zuführung für einen flüssigen Monomerstrom auf, die im Anschluss an eine Reaktionszone angeordnet ist und auf die in Stromrichtung wenigstens noch eine Reaktionszone folgt.
In einer geeigneten Ausgestaltung weist diese Vorrichtung wenigstens eine weitere Zuführung für einen flüssigen Additivstrom auf, die im Anschluss an die in Stromrichtung letzte Reaktionszone angeordnet ist.
In einer weiteren, geeigneten Ausgestaltung dieser Vorrichtung werden der weitere zugeführte flüssige Strom und der Austrag aus der Reaktionszone, an die sich die Zuführung anschließt, in einen Mischer mit Mikrostrukturen geführt und darin vermischt.
Das nach dem erfindungsgemäßen Verfahren erhaltenen Polymerisats wird als Dispergiermittel für Pigmente, als Komponente einer Wasch- oder Reinigungsmittelzusammensetzung, in der Wasserbehandlung oder als Additiv in der Erdölförderung, verwendet.

Monomere

In dem erfindungsgemäßen Verfahren wird zur Polymerisation wenigstens ein radikalisch polymerisierbares $\alpha$,ß-ethylenisch ungesättigtes Monomer eingesetzt. Geeignete Monomere sind ausgewählt unter monoethylenisch ungesättigten Carbon-, Sulfon- und Phosphonsäuren, Estern $\alpha$,ß-ethylenisch ungesättigter-Mono- und Dicarbonsäuren mit $C_1$-$C_{20}$-Alkanolen, Vinylaromaten, Estern von Vinylalkohol mit $C_1$-$C_{30}$-Monocarbonsäuren, ethylenisch ungesättigten Nitrilen, Vinylhalogeniden, Vinylidenhalogeniden, Estern $\alpha$,ß-ethylenisch ungesättigter Mono- und Dicarbonsäuren mit $C_2$-$C_{30}$-Alkandiolen, Amiden $\alpha$,ß-ethylenisch ungesättigter Mono- und Dicarbonsäuren mit $C_2$-$C_{30}$-Aminoalkoholen, die eine primäre oder sekundäre Aminogruppe aufweisen, primären Amiden $\alpha$,ß-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit $C_1$-$C_{30}$-Monocarbonsäuren, Estern von $\alpha$,ß-ethylenisch ungesättigten Mono- und Dicarbonsäuren mit Aminoalkoholen, Amiden $\alpha$,ß-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, vinyl- und allylsubstituierten Stickstoffheterocyclen, Vinylethern, $C_2$-$C_8$-Monoolefinen, nicht aromatischen Kohlenwasserstoffen mit mindestens zwei konjugierten Doppelbindungen, Polyether(meth)acrylaten, Harnstoffgruppen aufweisenden Monomeren und Mischungen davon.
Geeignete ethylenisch ungesättigte Carbonsäuren, Sulfonsäuren und Phosphonsäuren oder deren Derivate sind Acrylsäure, Methacrylsäure, Ethacrylsäure, $\alpha$-Chloracrylsäure, Crotonsäure, Maleinsäure, Maleinsäureanhydrid, Itaconsäure, Citraconsäure, Mesaconsäure, Glutaconsäure, Aconitsäure, Fumarsäure, die Halbester von monoethylenisch ungesättigten Dicarbonsäuren mit 4 bis 10, vorzugsweise 4 bis 6 C-Atomen, z. B. Maleinsäuremonomethylester, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren, 2-Acrylamido-2-methylpropansulfonsäure, Vinylphosphonsäure und Allylphosphonsäure. Die säuregruppenhaltigen Monomere können in Form der freien Säure oder in teilweise oder vollständig neutralisierter Form zur Polymerisation eingesetzt werden. Geeignete Basen zur Neutralisation sind z.B. KOH, NaOH, Ammoniak, etc. Besonders bevorzugt sind Acrylsäure, Methacrylsäure und Salze und Mischungen davon.

Geeignete Ester $\alpha$ ,ß-ethylenisch ungesättigter Mono- und Dicarbonsäuren mit $C_1$-$C_{20}$-Alkanolen sind Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat, Lauryl(meth)acrylat und Mischungen davon.

Bevorzugt als Vinylaromaten sind Styrol, 2-Methylstyrol, 4-Methylstyrol, 2-(n-Butyl)styrol, 4-(n-Butyl)styrol, 4-(n-Decyl)styrol und besonders bevorzugt Styrol.

Geeignete Ester von Vinylalkohol mit $C_1$-$C_{30}$-Monocarbonsäuren sind z. B. Vinylformiat, Vinylacetat, Vinylpropionat, Vinylbutyrat, Vinyllaurat, Vinylstearat, Vinylpropionat, Versaticsäurevinylester und Mischungen davon.

Geeignete ethylenisch ungesättigte Nitrile sind Acrylnitril, Methacrylnitril und Mischungen davon.

Geeignete Vinylhalogenide und Vinylidenhalogenide sind Vinylchlorid, Vinylidenchlorid, Vinylfluorid, Vinylidenfluorid und Mischungen davon.

Geeignete Ester $\alpha$ ,ß-ethylenisch ungesättigter Mono- und Dicarbonsäuren mit $C_2$-$C_{30}$-Alkandiolen sind z. B. 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat etc.

Geeignete primäre Amide $\alpha$ ,ß-ethylenisch ungesättigter Monocarbonsäuren und deren N-Alkyl- und N,N-Dialkylderivate sind Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(eth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid, Morpholinyl(meth)acrylamid.

Geeignete N-Vinyllactame und deren Derivate sind z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid.

Geeignete Ester von $\alpha$ ,ß-ethylenisch ungesättigten Mono- und Dicarbonsäuren mit Aminoalkoholen sind N,N-Dimethylaminomethyl(meth)acrylat, N,N-Dimethylaminoethyl(meth)acrylat, N,N-Diethylaminoethylacrylat, N,N-Dimethylaminopropyl(meth)acrylat, N,N-Diethylaminopropyl(meth)acrylat und N,N-Dimethylaminocyclohexyl(meth)acrylat.

Geeignete Amide $\alpha$ ,ß-ethylenisch ungesättigter Mono- und Dicarbonsäuren mit Diaminen, welche mindestens eine primäre oder sekundäre Aminogruppe aufweisen sind N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)-butyl]methacrylamid, N-[2-(Diethylamino)ethyl]acrylamid, N-[4-(Dimethylamino)cyclohexyl]acrylamid, N-[4-(Dimethylamino)cyclohexyl]methacrylamid etc.

Geeignete Monomere sind weiterhin N,N-Diallylamine und N,N-Diallyl-N-alkylamine und deren Säureadditionssalze und Quaternisierungsprodukte. Alkyl steht dabei vorzugsweise für $C_1$-$C_{24}$-Alkyl. Bevorzugt sind N,N-Diallyl-N-methylamin und N,N-Diallyl-N,N-dimethylammonium-Verbindungen, wie z. B. die Chloride und Bromide.

Geeignete Monomere M) sind weiterhin vinyl- und allylsubstituierte Stickstoffheterocyclen, wie N-Vinylimidazol, N-Vinyl-2-methylimidazol, vinyl- und allylsubstituierte heteroaromatische Verbindungen, wie 2- und 4-Vinylpyridin, 2- und 4-Allylpyridin, und die Salze davon.

Geeignete $C_2$-$C_8$-Monoolefine und nicht aromatische Kohlenwasserstoffe mit mindestens zwei konjugierten Doppelbindungen sind z. B. Ethylen, Propylen, Isobutylen, Isopren, und Butadien.

Die zuvor genannten Monomere können einzeln, in Form von Mischungen innerhalb einer Monomerklasse oder in Form von Mischungen aus verschiedenen Monomerklassen eingesetzt werden.

Das erfindungsgemäße Verfahren dient in einer speziellen Ausführung der Herstellung von Acrylsäurehomo- und copolymerisaten.

Geeignete Acrylsäurecopolymere weisen vorzugsweise wenigstens ein Comonomer auf, das ausgewählt ist unter $\alpha$ ,ß-ethylenisch ungesättigten Dicarbonsäuren, deren Mono- und Diestern und Anhydriden; Estern $\alpha$ ,ß-ethylenisch ungesättigter Mono- oder Dicarbonsäuren mit $C_1$-$C_{20}$-Alkanolen; (Meth)acylamid, Estern von Vinylalkohol mit $C_1$-$C_{30}$-Monocarbonsäuren; vinylsubstituierten Stickstoffheterocyclen und Mischungen davon.

In einer speziellen Ausführung ist das Comonomer ausgewählt unter Maleinsäureanhydrid, Acrylamid, Methacrylamid, Vinylformamid, Vinylacetamid, N-Vinylimidazol und Mischungen davon.

Das erfindungsgemäße Verfahren dient in einer weiteren speziellen Ausführung der Herstellung von Vinylpyrrolidonhomo- und copolymerisaten.

Verzweigungsagenzien

Bei der Herstellung der Polymerdispersionen kann zusätzlich zu den zuvor genannten Monomeren wenigstens ein Vernetzer eingesetzt werden. Diese Vernetzer werden erfindungsgemäß in einer so geringen Konzentration eingesetzt, dass sie lediglich eine Verzweigung bewirken. Sie werden im Rahmen der vorliegenden Erfindung entsprechend als Verzweigungsagenzien bezeichnet. Auf diese Weise können die rheologischen Eigenschaften der Polymerdispersionen modifiziert werden. Monomere, die eine vernetzende Funktion besitzen, sind Verbindungen mit mindestens zwei polymerisierbaren, ethylenisch ungesättigten, nichtkonjugierten Doppelbindungen im Molekül.

Geeignete Verzweigungsagenzien sind z. B. Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Verzweigungsagenzien enthalten aber mindestens zwei ethylenisch ungesättigte Gruppen.

Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäure-neopentylglykolmonoester, 2,2-Bis(4-hydroxyphenyl)-propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiapentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Cyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Verzweigungsagenzien sind die Vinylester oder die Ester einwertiger, ungesättigter Alkohole mit ethylenisch ungesättigten $C_3$-$C_6$-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellithsäure, Phthalsäure, Terephthalsäure, Citronensäure oder Bernsteinsäure.

Weitere geeignete Verzweigungsagenzien sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet als Verzweigungsagenzien sind außerdem geradkettige oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z. B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 bis 20 000.

Als Verzweigungsagenzien sind ferner geeignet die Acrylsäureamide, Methacrylsäureamide und N-Allylamine von mindestens zweiwertigen Aminen. Solche Amine sind z. B. 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren, wie Acrylsäure, Methacrylsäure, Itaconsäure, Maleinsäure, oder mindestens zweiwertigen Carbonsäuren, wie sie oben beschrieben wurden.

Ferner sind Triallylamin und Triallylmonoalkylammoniumsalze, z. B. Triallylmethylammoniumchlorid oder -methylsulfat, als Verzweigungsagenzien geeignet.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid, z. B. N,N'-Divinylethylenharnstoff oder N,N'-Divinylpropylenharnstoff.

Weitere geeignete Verzweigungsagenzien sind Divinyldioxan, Tetraallylsilan oder Tetravinylsilan. Selbstverständlich können auch Mischungen der vorgenannten Verbindungen eingesetzt werden.

Regler

Die radikalische Polymerisation erfolgt in Gegenwart mindestens eines Reglers. Regler werden vorzugsweise in einer Menge von 0,05 bis 25 Gew.-% und besonders bevorzugt von 0,1 bis 10 Gew.-%, bezogen auf das Gesamtgewicht der zur Polymerisation eingesetzten Monomere, eingesetzt.

Wenn der eingesetzte Regler gleichzeitig als Lösungsmittel für das eingesetzte Monomer dient, wird er in einer Menge von bis zu 70 Gew.-% bezogen auf das Gesamtgewicht der zur Polymerisation eingesetzten Monomere, eingesetzt. Prinzipiell ist es möglich, den als Lösungsmittel verwendeten Regler auch in höheren Mengen einzusetzen. Allerdings ist es unwirtschaftlich, den Regler in einer Menge von oberhalb 70 Gew.-%, bezogen auf das Gesamtgewicht der zur Polymerisation eingesetzten Monomere, einzusetzen.

Als Regler (Polymerisationsregler) werden allgemein Verbindungen mit hohen Übertragungskonstanten bezeichnet. Regler beschleunigen Kettenübertragungsreaktionen und bewirken damit eine Herabsetzung des Polymerisationsgrades der resultierenden Polymeren, ohne die Bruttoreaktions-Geschwindigkeit zu beeinflussen. Bei den Reglern kann man zwischen mono-, bi- oder polyfunktionalen Reglern unterscheiden, je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können auch als Regler eingesetzt werden: Ameisensäure, ihre Salze oder Ester, wie Ammoniumformiat, 2,5-Diphenyl-1-hexen, Hydroxylammoniumsulfat, und Hydroxylammoniumphosphat.

Weitere geeignete Regler sind Halogenverbindungen, z. B. Alkylhalogenide wie Tetrachlormethan, Chloroform, Bromtrichlormethan, Bromoform, Allylbromid und Benzylverbindungen wie Benzylchlorid oder Benzylbromid.

Als Regler geeignete Verbindungen, die auch als Lösungsmittel dienen können, sind mono- und polyfunktionelle Alkohole. Zum Beispiel können sie einzeln oder in Kombination ausgewählt sein unter Ethylalkohol, Methylalkohol, Propylalkohol, Butylalkohol, Isobutanol, tert.-Butylalkohol, Pentylalkohol, höheren Alkoholen von C12 bis C14, Methoxyethanol, Ethoxyethanol, Propoxyethanol, Ethylenglycol-Monoacetat, Cyclohexanol, Benzylalkohol, Phenethylalkohol und dergleichen, sowie unter Alkylenglykolen wie beispielsweise Ethylenglykol, 1,2-Propandiol, 1,3-Propandiol, 1,2-Butandiol, 1,3-Butandiol, 1,4-Butandiol, 2,3-Butandiol, 1,2-Pentandiol, 1,3-Pentandiol, 1,4-Pentandiol, Neopentylglykol, 1,5-Pentandiol, 2,3-Pentandiol, 2,4-Pentandiol, 1,6-Hexandiol und dergleichen; Hydrochinondiethylolether; Ethylenglykol-Derivative wie beispielsweise Diethylenglykol, Triethylenglykol und dergleichen; aliphatische polyfunktionelle Alkohole wie beispielsweise Sorbit, Cyclohexandiol, Xylylendiol und dergleichen; Glycerin und mono- oder disubstituierte Derivate davon bestehend aus Fettsäure-Glyzerin-Estern wie beispielsweise Monoacetin, Monolaurin, Monoolein, Monopalmitin, Monostearin und dergleichen und Glycerin-Monoether wie beispielsweise Thymylalkohol, Glyzerin-Monomethylether, Butylalkohol und dergleichen; Trimethylolpropan und mono- oder disubstituierte Derivative davon; Pentaerythritol und mono- bis trisubstituierte Derivative davon wie beispielsweise Pentaerythritoldioleat und Pentaerythritoldistearat; ein Fettsäure-Sorbitan-Ester; Saccharide bestehend aus Monosacchariden wie beispielsweise Erythritol, Threose, Ribose, Arabinose, Xylose, Lyxose, Allose, Aldose, Glucose, Mannose, Gulose, Idose, Galactose, Talose, Fructose, Apiose, Rhamnose, Psicose, Sorbose, Tagarose, Ribulose, Xylulose und dergleichen, Disacchariden wie beispielsweise Saccharose, Realrose, Lactose und dergleichen.

Diese Alkohole, die keine Additionspolymerisations-Reaktivität aufweisen, können entsprechend der Verwendung des zu erhaltenden Polymers ausgewählt werden. Zum Beispiel ist für den Fall, dass das Polymer als Rohmaterial für eine Thermoplast-Rezeptur oder ein thermoplastisches Polymer verwendet wird, wird bevorzugt ein monofunktioneller Alkohol eingesetzt, und für den Fall, dass das Polymer als Rohmaterial für eine Reaktionsharz-Rezeptur oder ein duroplastisches Polymer verwendet wird, wird bevorzugt ein polyfunktioneller Alkohol eingesetzt. Weiterhin wird die Einheitlichkeit des Reaktionssystems erhöht, wenn die Viskosität im Verlauf der Polymerisationsreaktion gering ist. Daher weist der Alkohol ohne Polymerisationsaktivität bevorzugt ein geringes Molekulargewicht auf. Beispielsweise beträgt das Molekulargewicht 400 oder weniger und stärker bevorzugt 200 oder weniger.

Weitere geeignete Regler sind Allylverbindungen, wie z. B. Allylalkohol, funktionalisierte Allylether, wie Allylethoxylate, Alkylallylether oder Glycerinmonoallylether.

Wird ein von dem Regler verschiedenes Lösungsmittel verwendet, werden als Regler bevorzugt Verbindungen eingesetzt, die Schwefel in gebundener Form enthalten. Schwefelhaltige Regler können aber erfindungsgemäß nicht mit dem einzusetzenden Monomer vorgemischt werden.

Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid.

Geeignet als Polymerisationsregler sind weiterhin Thiole (Verbindungen, die Schwefel in Form von SH-Gruppen erhalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan.

Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bisthioglykolate und Butandiol-bis-thioglykolat. Beispiele für polyfunktionale Regler sind Verbindungen, die mehr als zwei Schwefelatome in gebundener Form enthalten. Beispiele hierfür sind trifunktionale und/oder tetrafunktionale Mercaptane.

Besonders bevorzugt für den Fall, dass der Regler gleichzeitig als Lösungsmittel verwendet wird, werden Alkohole und Alkylhalogenide als Regler eingesetzt.

Alle genannten Regler können einzeln oder in Kombination miteinander eingesetzt werden.

Der Regler kann als solcher oder in einem Lösungsmittel gelöst eingesetzt werden. Im Allgemeinen wird der Regler in einem geeigneten Lösungsmittel gelöst eingesetzt, um ihn so genauer zudosieren zu können. Geeignete Lösungsmittel sind die im Folgenden für die Polymerisation genannten.

Initiator

Als Initiatorsystem kommen grundsätzliche alle für die radikalische Polymerisation ethylenisch ungesättigter Monomere bekannten Initiatoren in Betracht. Hierbei handelt es sich in der Regel um Initiatoren auf Basis organischer oder anorganischer Peroxide, um Azo-Initiatoren oder um sogenannte Redox-Initiatorsysteme. Die Menge an Initiator beträgt üblicherweise 0,1 bis 20 Gew.-%, insbesondere 0,2 bis 10 Gew.-% und speziell 0,5 bis 7 Gew.-%, bezogen auf die Gesamtmenge der zu polymerisierenden Monomere. Dabei handelt es sich speziell um thermische Initiatoren mit einer geeigneten Halbwertszeit bei der Polymerisationstemperatur.

Beispiele für geeignete Polymerisationsinitiatoren sind im Folgenden angegeben:

- Peroxidverbindungen: Hierzu zählen beispielsweise organische Peroxide und Hydroperoxide wie Acetylperoxid, Benzoylperoxid, Lauroylperoxid, tert-Butylperoxy-isobutyrat, Caproylperoxid, Cumolhydroperoxid, Di-tert.-Butyiperoxid, tert.-Butylhydroperoxid, tert.-Amylhydroperoxid, tert.-Butylperoxy-acetat, tert.-Butylperoxy-benzoat, tert.-Butylperoxy-octoat, tert.-Butylperoxy-neodecanoat, tert.-Amylperoxy-pivalat, tert.-Butylperoxy-pivalat, Diisopropylperoxy-dicarbonat, Dicyclohexylperoxy-dicarbonat, Dicumylperoxid, Dibenzoylperoxide, Dilauroylperoxid; anorganische Peroxide wie Wasserstoffperoxid, Peroxodischwefelsäure und deren Salze wie Ammonium-, Natrium und Kaliumperoxodisulfat;

- Azoverbindungen wie 2,2'-Azobis-isobutyronitril (AIBN), 2,2'-Azobis(2-methylbutyronitril), 2,2'-Azobis[2-methyl-N-(2-hydroxyethyl)propionamid], 1,1'-Azobis(1-cyclohexancarbonitril), 2,2'-Azobis(2,4-dimethylvaleronitril), 2,2'-Azobis(N,N'-dimethylenisobutyroamidin) 2,2'-Azobis(N;N'-dimethylenisobutyroamidin), 2,2'-Azobis(2-methylpropioamidin), N-(3-Hydroxy-1,1-bis-hydroxymethylpropyl)-2-[1-(3-hydroxy-1,1-bis-hydroxymethyl-propylcarbamoyl)-1-methyl-ethylazo]-2-methyl-propionamid sowie N-(1-Ethyl-3-hydroxypropyl)-2-[1-(1-ethyl-3-hydroxypropylcarbamoyl)-1-methyl-ethylazo]-2-methyl-propionamid; 2,2'-Azobis(2-cyano-2-butan), Dimethyl-2,2'-azobisdimethylisobutyrat, 4,4'-azobis(4-cyanopentanoic acid), 1,1'-Azobis(cyclohexancarbanitril), 2-(tert.-Butylazo)-2-cyanopropan, 2,2'-Azobis[2-methyl-N-(1,1)-bis(hydoxymethyl)-2-hydroxyethyl]propionamid, 2,2'-azobis[2-methyl-N-hydroxyethyl)]-propionamid, 2,2'-Azobis(N,N'-dimethylen-isobutyramidin)-dihydrochlorid, 2,2'-Azobis(2-amidinopropan)-dihydrochlorid, 2,2'-Azobis(N;N'-dimethylen-isobutyramin), 2,2'-Azobis(2-methyl-N-[1,1-bis(hydroxymethyl)-2-hydroxyethyl]propionamid), 2,2'-Azobis(2-methyl-N-[1,1-bis(hydroxymethyl)ethyl]propionamid), 2,2'-Azobis[2-methyl-N-(2-hydroxyethyl)propionamid], 2,2'-Azobis(isobutyramid)-Anhydrat, 2,2'-Azobis(2,2,4-trimethylpentan), 2,2'-Azobis(2-methylpropan)

- Redoxinitiatoren: hierunter versteht man Initiatorsysteme, die ein Oxidationsmittel, beispielsweise ein Salz der Peroxodischwefelsäure, Wasserstoffperoxid oder ein organisches Peroxid wie tert.-Butylhydroperoxid und ein Reduktionsmittel enthalten. Als Reduktionsmittel enthalten sie vorzugsweise eine Schwefelverbindung, die insbesondere ausgewählt ist unter Natriumhydrogensulfit, Natriumhydroxymethansulfinat und dem Hydrogensulfit-Addukt an Aceton. Weitere geeignete Reduktionsmittel sind stickstoff- und phosphorhaltige Verbindungen wie phosphorige Säure, Hypophosphite und Phosphinate, Di-tert-Butylhyponitrit und Dicumylhyponitrit, sowie Hydrazin bzw. Hydrazinhydrat und Ascorbinsäure. Weiterhin können Redoxinitiatorsysteme einen Zusatz geringer Mengen von Redoxmetallsalzen wie Eisensalze, Vanadiumsalze, Kupfersalze, Chromsalze oder Mangansalze enthalten wie beispielsweise das Redoxinitiatorsystem Ascorbinsäure/Eisen(II)sulfat/Natriumperoxodisulfat.

Die oben genannten Initiatoren können auch in beliebigen Kombinationen eingesetzt werden.

Die Initiatoren können als solche oder in einem Lösungsmittel gelöst eingesetzt werden. Bevorzugt werden die Initiatoren in einem geeigneten Lösungsmittel gelöst eingesetzt. Geeignete Lösungsmittel sind die im Folgenden für die Polymerisation genannten.

Lösungsmittel und regelnde Lösungsmittel bzw. als Regler wirkende Lösungsmittel

Die Herstellung der Polymere durch radikalische Lösungspolymerisation kann in wässrigem Medium, in einem organischen Lösungsmittel oder in einem Lösungsmittelgemisch erfolgen. Beispiele für organische Lösungsmittel sind Alkohole, wie z. B. Methanol, Ethanol, n-Propanol und Isopropanol, dipolar-aprotische Lösungsmittel, z. B. N-Alkyllactame wie N-Methylpyrrolidon (NMP), N-Ethylpyrrolidon, weiterhin Dimethylsulfoxid (DMSO), N,N-Dialkylamide aliphatischer Carbonsäuren wie N,N-Dimethylformamid (DMF), N,N-Dimethylacetamid, weiterhin aromatische, aliphatische und cycloaliphatische Kohlenwasserstoffe wie Alkylaromaten, Hexan, Benzol , Toluol oder Xylol, die halogeniert sein können, sowie Mischungen hiervon. Bevorzugte Lösungsmittel sind Wasser, Isopropanol, Methanol, Toluol, DMF und NMP sowie deren Mischungen.

In einer bevorzugten Ausführungsform erfolgt die Umsetzung in einem wässrigen Polymerisationsmedium. Unter einem wässrigen Polymerisationsmedium versteht man Wasser sowie Mischungen von Wasser mit einem oder mehreren organischen, mit Wasser mischbaren Lösungsmitteln. Der Anteil an organischen, mit Wasser mischbaren Lösungsmitteln wird typischerweise 50 Vol.-%, insbesondere 20 Vol.-% und speziell 10 Vol.-%, bezogen auf die Gesamtmenge an Wasser und organischem Lösungsmittel, nicht überschreiten. Beispiele für mit Wasser mischbare, organische Lösungsmittel sind $C_1$-$C_4$-Alkanole wie Methanol, Ethanol, n-Propanol, Isopropanol, n-Butanol, cyclische Ether wie Dioxan und Tetrahydrofuran sowie Alkylencarbonate wie Ethylencarbonat (2-Oxo-1,3-dioxolan) und Propylencarbonat (2-Oxo-1,3-dioxan). Bevorzugtes wässriges Polymerisationsmedium ist Wasser.

Die Polymerisation wird in der bevorzugten Ausführungsform vorzugsweise bei einer Temperatur im Bereich von 30 °C bis 180 °C, insbesondere bei einer Temperatur im Bereich von 40 °C bis 150 °C und besonders bevorzugt in einem Bereich von 60 °C bis 110 °C durchgeführt.

In einer weiteren bevorzugten Ausführungsform erfolgt die Umsetzung in einem organisch/wässrigen Polymerisationsmedium. Unter einem organisch/wässrigen Polymerisationsmedium versteht man Mischungen von Wasser mit einem oder mehreren organischen, mit Wasser mischbaren Lösungsmitteln. Der Anteil der organischen, mit Wasser mischbaren Lösungsmittel wird typischerweise oberhalb von 50 Vol.-% und insbesondere oberhalb von 70 Vol.-%, bezogen auf die Gesamtmenge an Wasser und organischem Lösungsmittel, liegen.

Die Polymerisation wird in dieser bevorzugten Ausführungsform vorzugsweise bei einer Temperatur im Bereich von 50 °C bis 200 °C, stärker bevorzugt bei einer Temperatur im Bereich von 70 °C bis 180 °C und insbesondere bei einer Temperatur im Bereich von 90 °C bis 150 °C durchgeführt

Die Polymerisation erfolgt üblicherweise unter atmosphärischem Druck, sie kann jedoch auch unter vermindertem oder erhöhtem Druck ablaufen. Ein geeigneter Druckbereich liegt zwischen 0,5 und 50 bar und bevorzugt zwischen 1 und 25 bar. Die Untergrenze des Druckbereiches ist dabei in der Regel durch den jeweiligen Siededruck bei der entsprechenden Betriebs- bzw. Reaktionstemperatur festgelegt.

Die Verweilzeit in der Reaktionszone für die Polymerisation liegt vorzugsweise im Bereich von 5 sec bis 30 min, besonders bevorzugt im Bereich von 10 sec bis 15 min und insbesondere im Bereich von 1 min bis 10 min.

Der Reaktionsaustrag kann einer Nachbehandlung unterzogen werden, die z.B. ausgewählt ist unter Nachpolymerisation, Desodorierung, Neutralisation, einer davon verschiedenen Additivierung und Kombinationen davon. Dieser Folgeschritt kann diskontinuierlich oder kontinuierlich erfolgen. Bevorzugt ist die kontinuierliche Durchführung der Nachpolymerisation, Desodorierung, Neutralisation und/oder einer davon verschiedenen Additivierung.

Zur Erzielung möglichst reiner Polymere mit geringem Restmonomergehalt kann sich an die Polymerisation (Hauptpolymerisation) ein Nachpolymerisationsschritt anschließen. Die Nachpolymerisation kann in Gegenwart desselben oder eines anderen Initiatorsystems wie die Hauptpolymerisation erfolgen. Vorzugsweise erfolgt die Nachpolymerisation mindestens bei der gleichen, vorzugsweise bei einer höheren Temperatur als die Hauptpolymerisation.

In einer weiteren erfindungsgemäßen Ausführungsform wird dem Reaktionsaustrag wenigstens ein Additiv zugegeben. Dieses Additiv kann beispielsweise mit dem Reaktionsaustrag in einem Mischer vermischt werden. Bei dem Additiv kann es sich sowohl um ein einzelnes Additiv als auch um ein Gemisch von Additiven handeln.

In einer besonders bevorzugten Ausführungsform wird zur Nachbehandlung mindestens ein Additiv mit dem Reaktionsaustrag unter Einsatz eines Mischers mit Mikrostrukturen vermischt. Bei jedem der Additive kann es sich sowohl um ein beliebiges, für diese Anwendung übliches Additiv als auch jeweils um eine Mischung aus für diese Anwendung üblichen Additiven handeln. Dazu zählen beispielsweise den pH-Wert einstellende Substanzen, Reduktions- und Bleichmittel, wie z. B. die Alkalimetallsalze der Hydroxymethansulfinsäure (z. B. Rongallit® C der BASF Aktiengesellschaft), Komplexbildner, Desodorantien, Geschmacksstoffe, Geruchsstoffe, Desinfektionsmittel, Konservierungsmittel und Viskositätsmodifizierer.

Die erhaltenen Homopolymere der Acrylsäure weisen vorzugsweise ein zahlenmittleres Molekulargewicht ($M_n$) lt. Gelpermeationschromatographie, GPC (engl.: Size Exclusion Chromatographie, SEC) im wässrigen Medium im Bereich von 1000 bis 20000 Dalton, bevorzugt im Bereich von 1000 bis 10000 Dalton und besonders bevorzugt im Bereich von 1000 bis 8000 Dalton auf, wobei das Verhältnis der gewichtsmittferen Molmasse ($M_w$) zur zahlenmittleren Molmasse, definiert als Verteilungsbreite $D(=M_w/M_n)$ kleiner als 2,5 und bevorzugt kleiner als 2,0 ist.

Die erhaltenen Copolymere der Acrylsäure mit z.B. Maleinsäureanhydrid, Acrylamid, Methacrylamid, Vinylformamid oder Vinylimidazol weisen ein zahlenmittleres Molekulargewicht ($M_n$) lt. Gelpermeationschromatographie, GPC (engl. : Size Exclusion Chromatographie, SEC) im wässrigen Medium im Bereich von 1000 bis 100000 Dalton und bevorzugt im Bereich von 3000 bis 60.000 Dalton auf, wobei das Verhältnis der gewichtsmittleren Molmasse ($M_w$) zur zahlenmittleren Molmasse, definiert als Verteilungsbreite $D(=M_w/M_n)$ kleiner als 10 und bevorzugt kleiner als 5 ist.

Wird bei der Herstellung der Polymere ein organisches Lösungsmittel eingesetzt, so kann dieses durch übliche, dem Fachmann bekannte Verfahren, z. B. durch Destillation oder Abdampfen bei vermindertem Druck, entfernt werden.

Die erhaltenen flüssigen Polymerzusammensetzungen können durch verschiedene Trocknungsverfahren, wie z. B. Sprühtrocknung, Sprühwirbelschicht, Walzentrocknung oder Gefriertrocknung in Pulverform überführt werden. Bevorzugt wird die Sprühtrocknung eingesetzt. Die so erhaltenen Polymer-Trockenpulver lassen sich vorteilhafterweise durch Lösen in einem geeigneten Lösungsmittel erneut in eine Polymerlösung überführen. In wässrigen Medien unlösliche Polymere lassen sich in der Regel durch (Re)dispergieren in eine wässrige Dispersion überführen. Pulverförmige Copolymere haben den Vorteil einer besseren Lagerfähigkeit, einer einfacheren Transportmöglichkeit und zeigen in der Regel eine geringere Neigung für Keimbefall.

Eine Vorrichtung zur kontinuierlichen Herstellung von Polymeren umfasst:

- wenigstens drei Vorlagebehälter für flüssige Ausgangsstoffe, wobei die Ausgangsstoffe wenigstens einen monomerhaltigen Ausgangsstoff, wenigstens einen initiatorhaltigen Ausgangsstoff und wenigstens einen, einen Polymerisationsregler enthaltenden Ausgangsstoff umfassen,

- je eine Zuführung für die flüssigen Ströme aus den wenigstens drei Vorlagebehältern,

- einen oder mehrere hintereinander geschalte Mischer, dem/denen die flüssigen Ströme zugeführt und in denen sie unter Erhalt eines Reaktionsgemisches vermischt werden, wobei zumindest der in Stromrichtung letzte Mischer vor Eintritt in die Reaktionszone(n) mit Mikrostrukturen ausgestattet ist,

- wenigstens eine Reaktionszone, und

- einen Austragsbehälter, der gegebenenfalls mit einer oder mehreren Zugabe- und/oder Mischvorrichtungen versehen ist.

Geeignete Mischer sind aus dem Stand der Technik bekannt. Dabei kann es sich prinzipiell um Mischer mit oder ohne Mikrostrukturen handeln, sofern die eingangs definierten Bedingungen erfüllt sind. Geeignete Mischer ohne Mikrostrukturen, die im Rahmen der vorliegenden Erfindung auch als "herkömmliche" oder "konventionelle" Mischer bezeichnet werden, sind alle für das kontinuierliche Mischen von Flüssigkeiten geeignete und dem Fachmann hinreichend bekannte Mischer. Sie werden entsprechend den verfahrenstechnischen Anforderungen ausgewählt.

Herkömmliche Mischer unterscheiden sich von Mischern mit Mikrostrukturen durch ihre charakteristische Dimension. Unter der charakteristischen Dimension einer durchströmten Einrichtung, z.B. eines Mischers, versteht man im Rahmen der vorliegenden Erfindung die kleinste, zur Strömungsrichtung senkrechte Ausdehnung. Die charakteristische Dimension eines Mikromischers ist deutlich kleiner als die eines herkömmlichen Mischers (z.B. wenigstens um den Faktor 10 oder wenigstens um den Faktor 100 oder wenigstens um den Faktor 1000) und liegt üblicherweise im Mikrometer- bis Millimeterbereich.

Herkömmliche Mischer weisen eine charakteristische Dimension im für das Mischen relevanten Bereich von mehr als 10 mm auf, Mischer mit Mikrostrukturen hingegen von höchstens 10 mm. Die charakteristische Dimension eines erfindungsgemäß verwendeten Mischers mit Mikrostrukturen liegt vorzugsweise im Bereich von 1 $\mu$m bis 10000 $\mu$m, besonders bevorzugt im Bereich 10 $\mu$m bis 5000 $\mu$m und insbesondere im Bereich von 25 $\mu$m bis 4000 $\mu$m. Die optimale charakteristische Dimension ergibt sich hierbei aus den Anforderungen an die Mischgüte und die Verstopfungsanfälligkeit der Mischvorrichtung. Mischer mit Mikrostrukturen werden auch als Mikromischer bezeichnet.

Beispiele für geeignete Mischer ohne Mikrostrukturen sind sowohl konventionelle dynamische Mischer, wie beispielsweise Mischpumpen und kontinuierlich durchflossene Rührkessel, als auch in Rohrleitungen eingebaute Mischvorrichtungen wie beispielsweise Staubleche, Blenden, Strahlmischer, T- und Y-Stücke sowie statische Mischer.

Beispiele für geeignete Mikromischer sind:

I statische Mischer

1. laminare Diffusionsmischer

a) "chaotisch-laminare" Mischer, wie beispielsweise T-Mischer, Y-Mischer, oder Zyklonmischer
b) Multilaminationsmischer bzw. Interdigitalmischer

2. laminare Diffusionsmischer mit konvektiver Quervermischung, wie beispielsweise geformte Mischkanäle oder Kanäle mit Sekundärstrukturen
3. Split-Recombine-Mischer, wie beispielsweise Raupenmischer

II dynamische Mischer, wie beispielsweise Mischpumpen
III Kombinationen davon;

wobei diese selbstverständlich den oben genannten Bedingungen für die charakteristischen Dimensionen genügen.
In einer geeigneten Ausführungsform werden Mischer mit Mikrostrukturen eingesetzt, die mindestens einen Mischkanal aufweisen. Das Mischen kann laminar, laminarchaotisch oder turbulent erfolgen.
Im Folgenden werden erfindungsgemäß bevorzugte Mikromischer näher erläutert.
Bei laminaren Diffusionsmischern erfolgt die Vermischung von Teilströmen des Fluids, das an einer Mikrostruktur in eine Vielzahl mikroskopisch kleiner Strömungslamellen mit einer Dicke im Bereich von 10 bis 2000 $\mu$m, speziell 20 bis 1000 $\mu$m und insbesondere 40 bis 500 $\mu$m aufgefächert wurde, ausschließlich durch molekulare Diffusion senkrecht zur Hauptströmungsrichtung. Eine Auslegung des Mischers kann über die Fourier-Zahl Fo = $\tau/\tau_D$ erfolgen, welche das Verhältnis von Verweilzeit im Mischer zur Diffusionszeit zwischen den einzelnen Strömungslamellen darstellt. Für die Diffusionszeit $T_D$ gilt dabei

$$T_D = \frac{s^2}{D}.$$

worin

s halbe Strömungslamelleridicke [m]
D Diffusionskoeffizient [m$^2$/sec]

bedeutet.
Dieses Verhältnis wird größer als 1, bevorzugt größer als 2, besonders bevorzugt größer als 3 und insbesondere größer als 4 gewählt, um eine möglichst gute molekulare Vermischung der Stoffströme am Auslass des Mischers zu gewährleisten.
Laminare Diffusionsmischer können als einfache T- oder Y-Mischer oder als so genannte Multilaminationsmischer ausgeführt sein. Beim T- oder Y-Mischer werden die beiden (oder auch mehr als zwei) zu mischenden Teilströme einem Einzelkanal durch eine T- oder Y-förmige Anordnung zugeführt. Maßgebend für den transversalen Diffusionsweg $S_{Diff}$ ist hierbei die Kanalweite $\delta_K$. Für typische Kanalweiten zwischen 100 $\mu$m und 1 mm ergeben sich für Flüssigkeiten übliche Mischzeiten im Bereich von Sekunden bis Minuten. Werden, wie im vorliegenden Verfahren, Flüssigkeiten gemischt, so ist es vorteilhaft, den Mischvorgang zusätzlich, beispielsweise durch strömungsinduzierte Quervermischung, zu unterstützen.
Bei Multilaminationsmischern bzw. Interdigitalmischern werden die zu vermischenden Teilströme in einem Verteiler in eine große Anzahl von Mikrostromfäden aufgeteilt und am Austritt des Verteilers dann der Mischstrecke alternierend in Lamellen zugeführt. Für Flüssigkeiten erreicht man mit den klassischen Multilaminationsmischern Mischzeiten im Sekundenbereich. Da dies für manche Anwendungen (z. B. bei schnellen Reaktionen) nicht ausreichend ist, wurde das Grundprinzip dahingehend weiterentwickelt, dass die Strömungslamellen nochmals zusätzlich geometrisch oder hydrodynamisch fokussiert werden. Die geometrische Fokussierung wird durch eine Verengung in der Mischstrecke erreicht. Die hydrodynamische Fokussierung wird durch zwei Seitenströme erzielt, die den Hauptstrom senkrecht anströmen und so die Strömungslamellen weiter komprimieren. Durch die beschriebene Fokussierung lassen sich laterale Abmessungen der Strömungslamellen von wenigen Mikrometern realisieren, so dass selbst Flüssigkeiten innerhalb von einigen 10 ms gemischt werden können.

Als laminare Diffusionsmischer mit konvektiver Quervermischung können Mikromischer mit strukturierten Wänden eingesetzt werden. Bei Mikromischern mit strukturierten Wänden sind sekundäre Strukturen (Riefen oder Stege) auf den Kanalwänden angeordnet. Bevorzugt sind sie in einem bestimmten Winkel zur Hauptströmrichtung angeordnet, beispielsweise in einem Winkel von etwa 30° bis zu 90°. Im Falle trägheitsdominierter Strömungsbedingungen bilden sich hierdurch Sekundärwirbel aus, die den Mischprozess unterstützen.

In einer weiteren geeigneten Ausführung wird als Mischer mit Mikrostruktur ein Split-Recombine-Mischer eingesetzt. Split-Recombine-Mischer zeichnen sich durch Stufen aus wiederkehrender Trennung und Zusammenführung von Strömen aus. Zwei Bereiche eines ungemischten Fluidstroms (meistens geht man von zwei gleich großen Lamellen aus) werden in einer Stufe jeweils voneinander weg geführt, in jeweils zwei neue Bereiche zerteilt, und wieder zusammengeführt. Alle vier Bereiche werden so alternierend nebeneinander angeordnet, dass die Ursprungsgeometrie wieder hergestellt wird. In jeder dieser Stufen wird die Lamellenzahl also stufenweise verdoppelt und dadurch Lamellendicke und Diffusionsweg halbiert.

Beispiele für geeignete Split-Recombine-Mischer sind der Raupenmischer von der Firma IMM und der Caterpillar-Mischer von der Firma BTS-Ehrfeld.

Beispiele für geeignete dynamische Mikromischer sind beispielsweise Mikro-Mischpumpen.

Beispiele für bevorzugte statische Mikromischer sind insbesondere folgende laminare Diffusionsmischer:

- "chaotisch-laminare" Mischer, wie beispielsweise T- oder Y-Stücke mit einem sehr kleinen Kapillardurchmesser im Bereich von 100 $\mu$m bis 1500 $\mu$m und bevorzugt 100 $\mu$m bis 800 $\mu$m am Mischpunkt und Zyklonmischer;
- Multilaminationsmischer, wie beispielsweise die Schlitzplattenmischer LH2 und LH 25 oder größere Typen von der Firma Ehrfeld sowie die Interdigitalmischer SIMM und Starlam® von der Firma IMM;
- Mikromischer nach dem Multilaminationsprinzip mit überlagerter Dehnströmung, wie beispielsweise der SuperFocus Interdigital Mikrostrukturmischer SFIMM von der Firma IMM.

Die Vorrichtung umfasst gemäß einer Ausführungsform zwei Reaktionszonen.

In einer bevorzugten Ausführungsform weist die Vorrichtung wenigstens eine weitere Zuführung für einen flüssigen Strom auf, die im Verlauf einer Reaktionszone oder im Anschluss an eine Reaktionszone angeordnet ist.

Besonders bevorzugt weist die Vorrichtung wenigstens eine weitere Zuführung für einen flüssigen Monomerstrom auf, die im Anschluss an eine Reaktionszone angeordnet ist und auf die in Stromrichtung wenigstens noch eine Reaktionszone folgt.

Alternativ oder zusätzlich dazu kann auch ein weiterer, einen Initiator enthaltender Strom für eine Postpolymerisation in einer anschließenden Reaktionszone zugeführt werden.

Insbesondere weist die Vorrichtung wenigstens eine weitere Zuführung für einen flüssigen Additivstrom auf, die im Anschluss an die in Stromrichtung letzte Reaktionszone angeordnet ist.

Besonders bevorzugt werden der weitere zugeführte flüssige Strom und der Austrag aus der Reaktionszone, an die sich die Zuführung anschließt, in einen Mischer mit Mikrostrukturen geführt und darin vermischt.

Unter einer Reaktionszone wird im Sinne der vorliegenden Erfindung ein Abschnitt eines Reaktors in Strömungsrichtung der flüssigen Stoffströme verstanden, in dem die Polymerisation abläuft. Eine Reaktionszone kann innerhalb eines Teils eines Reaktors, innerhalb eines gesamten Reaktors oder innerhalb von zwei oder mehr Reaktoren angeordnet sein. In einer bevorzugten Ausführung befindet sich jede Reaktionszone in einem separaten Reaktor.

Wenigstens ein Reaktor mit wenigstens einer mikrostrukturierten Reaktionszone für die Polymerisation wird eingesetzt. Der Reaktor mit einer mikrostrukturierten Reaktionszone wird hier und im Folgenden auch als Reaktor mit Mikrostrukturen, mikrostrukturierter Reaktor oder Mikroreaktor bezeichnet. Mikrostrukturierte Reaktoren sind geeignet, die thermische Homogenität senkrecht zur Strömungsrichtung zu gewährleisten. Dabei weist prinzipiell jedes differentielle Volumenelement die im Wesentlichen gleiche Temperatur über den jeweiligen Strömungsquerschnitt auf. Die maximal zulässigen Temperaturunterschiede in einem Strömungsquerschnitt hängen dabei von den gewünschten Produkteigenschaften ab. Bevorzugt beträgt die maximale Temperaturdifferenz in einem Strömungsquerschnitt weniger als 40 °C, besonders bevorzugt weniger als 20 °C und ganz besonders bevorzugt weniger als 10 °C und insbesondere weniger als 5 °C.

Herkömmliche Reaktoren und Mikroreaktoren unterscheiden sich durch ihre charakteristische Dimension und insbesondere durch die charakteristische Dimension ihrer Reaktionszone. Unter der charakteristischen Dimension einer Einrichtung, z.B. eines Reaktors, versteht man im Rahmen der vorliegenden Erfindung die kleinste, zur Strömungsrichtung senkrechte Ausdehnung. Die charakteristische Dimension der Reaktionszone eines Mikroreaktors ist deutlich kleiner ist als die eines herkömmlichen Reaktors (z.B. wenigstens um den Faktor 10 oder wenigstens um den Faktor 100 oder wenigstens um den Faktor 1000) und liegt üblicherweise im Bereich von hundert Nanometern bis einigen zig Millimetern. Häufig liegt sie im Bereich von 1 $\mu$m bis 30 mm. Im Vergleich zu herkömmlichen Reaktoren zeigen daher Mikroreaktoren in Bezug auf die ablaufenden Wärme- und Stofftransportvorgänge ein signifikant verschiedenes Verhalten. Durch das größere Verhältnis von Oberfläche zu Reaktorvolumen wird beispielsweise eine sehr gute Wärmezu- bzw. -abfuhr ermöglicht, weshalb sich auch stark endo- bzw. exotherme Reaktionen nahezu isotherm durchführen lassen.

Herkömmliche Reaktoren weisen eine charakteristische Dimension von > 30 mm auf, Mikroreaktoren hingegen ≤ 30 mm. Die charakteristische Dimension der Reaktionszone des Reaktors mit Mikrostrukturen beträgt höchstens 4 mm, z.B. 0,1 bis 4 mm oder vorzugsweise 0,2 bis 4 mm oder besonders bevorzugt 0,4 bis 4 mm und noch spezieller 0,4 bis 3 mm.

Erfindungsgemäß einzusetzenden Mikroreaktoren sind vorzugsweise ausgewählt unter temperierbaren Rohrreaktoren, Rohrbündelwärmetauschern, Plattenwärmetauschern und temperierbaren Rohrreaktoren mit Einbauten. Erfindungsgemäß einzusetzende Rohrreaktoren, Rohrbündelwärmetauscher und Plattenwärmetauscher weisen als charakteristische Dimensionen Rohr-bzw. Kapillardurchmesser im Bereich von 0,7 bis 4 mm und insbesondere im Bereich von 0,8 mm bis 3 mm, und Schichthöhen bzw. Kanalbreiten im Bereich von vorzugsweise 0,2 mm bis 4 mm auf. Erfindungsgemäß einzusetzende Rohrreaktoren mit Einbauten weisen Rohrdurchmesser im Bereich von 5 mm bis 500 mm, bevorzugt im Bereich von 8 mm bis 200 mm und besonders bevorzugt im Bereich von 10 mm bis 100 mm auf. Alternativ können auch Plattenapparaten vergleichbare Flachkanäle mit eingelegten Mischstrukturen erfindungsgemäß zum Einsatz kommen. Sie weisen Höhen im Bereich von 1 mm bis 20 mm und Breiten im Bereich von 10 mm bis 1000 mm und insbesondere im Bereich von 10 mm bis 500 mm auf. Optional können die Rohrreaktoren Mischelemente enthalten, welche von Temperierkanälen durchzogen sind (wie z.B. der Typ CSE-XR® von der Firma Fluitec, CH).

Die optimale charakteristische Dimension ergibt sich hierbei aus den Anforderungen an die zulässige Anisothermie der Reaktionsführung, den maximal zulässigen Druckverlust und die Verstopfungsanfälligkeit des Reaktors.

Besonders bevorzugte Mikroreaktoren sind:

- Rohrreaktoren aus Kapillaren, Kapillarbündeln mit Rohrquerschnitten von 0,7 bis 4 mm, mit oder ohne zusätzliche mischende Einbauten, wobei die Rohre bzw. Kapillaren von einem Temperiermedium umspült werden können;
- Rohrreaktoren, bei dem der Wärmeträger in den Kapillaren/Rohren geführt wird, und das zu temperierende Produkt um die Rohre geführt und durch Einbauten (Mischelemente) homogenisiert wird, wie beispielsweise der Typ CSESX® von der Firma Fluitec, CH;
- Plattenreaktoren, die wie Plattenwärmetauscher mit isolierten parallelen Kanälen, Netzwerken von Kanälen oder Flächen, welche mit oder ohne strömungsbrechenden Einbauten (Pfosten) ausgerüstet sind, aufgebaut sind, wobei die Platten Produkt und Wärmeträger parallel oder in einer Schichtstruktur, welche abwechselnd Wärmeträger- und Produkt-Lagen aufweist, führen, so dass während der Reaktion die chemische und thermische Homogenität sichergestellt werden kann; sowie
- Reaktoren mit "flachen" Kanalstrukturen, welche nur in der Höhe eine "Mikrodimension" aufweisen und nahezu beliebig breit sein können, deren typische kammförmige Einbauten die Ausbildung eines Strömungsprofils verhindern und zu einer für die definierte Reaktionsführung und Verweilzeit wichtigen, engen Verweilzeitverteilung führen.

In einer bevorzugten Ausführung der Erfindung wird mindestens ein Reaktor eingesetzt, der die Verweilzeitcharakteristik einer Pfropfenströmung aufweist. Liegt in einem Rohrreaktor eine Pfropfenströmung ("plug-flow") vor, so kann der Zustand des Reaktionsgemisches (z.B. Temperatur, Zusammensetzung etc.) in Strömungsrichtung variieren, für jeden einzelnen Querschnitt senkrecht zur Fließrichtung hingegen ist der Zustand des Reaktionsgemisches gleich. Damit haben alle in das Rohr eintretenden Volumenelemente die gleiche Verweilzeit im Reaktor. Bildlich gesehen durchströmt die Flüssigkeit das Rohr, als handele es sich um eine Aneinanderreihung leicht durch das Rohr gleitender Pfropfen. Zusätzlich kann die Quervermischung durch den intensivierten Stofftransport senkrecht zur Strömungsrichtung den Konzentrationsgradienten senkrecht zur Strömungsrichtung ausgleichen.

Trotz der meist laminaren Durchströmung von Apparaturen mit Mikrostrukturen lässt sich also Rückvermischung vermeiden und eine enge Verweilzeitverteilung ähnlich wie bei einem idealen Strömungsrohr erreichen.

Die Bodensteinzahl ist eine dimensionslose Kennzahl und beschreibt das Verhältnis des Konvektionsstromes zum Dispersionsstrom (z.B. M. Baerns, H. Hofmann, A. Renken, Chemische Reaktionstechnik, Lehrbuch der Technischen Chemie, Band 1, 2. Auflage, S. 332 ff). Sie charakterisiert also die Rückvermischung innerhalb eines Systems.

$$Bo = \frac{uL}{D_{ax}}$$

mit

u    Strömungsgeschwindigkeit [ms$^{-1}$]
L    Länge des Reaktors[m]
$D_{ax}$    axialer Dispersionskoeffizient[m$^2$h$^{-1}$]

Eine Bodensteinzahl von Null entspricht der vollständigen Rückvermischung in einem idealen kontinuierlichen Rührkessel. Eine unendlich große Bodensteinzahl hingegen bedeutet absolut keine Rückvermischung, wie bei der kontinuierlichen Durchströmung eines idealen Strömungsrohres.

In Kapillarreaktoren kann das gewünschte Rückvermischungsverhalten durch Einstellung des Verhältnisses von Länge zu Durchmesser in Abhängigkeit von den Stoffparametern und dem Strömungszustand eingestellt werden. Die zu Grunde liegenden Berechnungsvorschriften sind dem Fachmann bekannt (z.B. M. Baerns, H. Hofmann, A. Renken: Chemische Reaktionstechnik, Lehrbuch der Technischen Chemie, Band 1, 2. Auflage, S. 339 ff). Soll ein möglichst rückvermischungsarmes Verhalten realisiert werden, so wird die oben definierte Bodensteinzahl bevorzugt größer 10, besonders bevorzugt größer 20 und insbesondere größer 50 gewählt. Für eine Bodensteinzahl von größer 100 besitzt der Kapillarreaktor dann weitgehend einen Propfenströmungscharakter.

Als Materialien für die erfindungsgemäß einzusetzenden Mischer und Reaktoren haben sich im Bereich niedriger Temperaturen austenitische Edelstähle, wie 1.4541 bzw. 1.4571, allgemein als V4A bzw. als V2A bekannt, sowie Edelstähle der US-Typen SS316 und SS317Ti, als vorteilhaft erwiesen. Bei höheren Temperaturen und unter korrosiven Bedingungen ist PEEK (Polyetheretherketone: hochtemperaturbeständige thermoplastische Kunststoffe) ebenfalls geeignet. Es können aber auch korrosionsresistentere Hastelloy®-Typen, Glas oder Keramik als Materialien und/oder entsprechende Beschichtungen, wie beispielsweise $TiN_3$, Ni-PTFE, Ni-PFA oder dergleichen, für die erfindungsgemäß einzusetzenden Mischer und Reaktoren verwendet werden.

Der Wärmeübergang ist auf Grund der hohen Wärmeübergangskoeffizienten und auf Grund eines hohen Verhältnisses von Oberfläche zu Reaktionsvolumen so gewählt, dass im Reaktionsmedium Temperaturabweichungen gegenüber der Temperatur des Temperiermediums von weniger als 40 °C, bevorzugt von weniger als 20 °C, besonders bevorzugt von weniger als 10 °C und insbesondere von weniger als 5 °C auftreten. So kann die Reaktion unter weitgehend isothermen und damit definierten und kontrollierten Bedingungen ablaufen. Um das zu realisieren, muss je nach Exothermie und charakteristischer Reaktionszeit der Polymerisationsreaktion ein Verhältnis von Wärmeaustauschfläche zu Reaktionsvolumen von größer als 250 $m^2/m^3$, bevorzugt größer als 500 $m^2/m^3$, besonders bevorzugt größer als 1000 $m^2/m^3$ und insbesondere größer als 2000 $m^2/m^3$ gewählt werden. Der Wärmeübergangskoeffizient auf der Seite des Reaktionsmediums muss dabei mehr als 50 $W/m^2K$, bevorzugt mehr als 100 $W/m^2K$, besonders bevorzugt mehr als 200 $W/m^2K$ und insbesondere mehr als 400 $W/m^2K$ betragen.

Zur Festlegung des Produktes aus volumenspezifischer Wärmeübergangsfläche und Wärmeübergangskoeffizient kann folgende Beziehung angewendet werden:

$$\alpha \cdot \left( \frac{A}{V} \right) = \frac{\Delta H \cdot \rho}{\Delta T \cdot \Delta t_R}$$

worin

| | |
|---|---|
| $\alpha$ | Wärmeübergangskoeffizient [$W/m^2K$], |
| A/V | volumenspezifische Wärmeübergangsfläche [$m^2/m^3$], |
| $\Delta H$ | Reaktionsenthalpie [J/kg], |
| $\Delta T$ | zulässige maximale Temperaturabweichung im Reaktionsmedium [K], |
| $\rho$ | Partialdichte der Monomers im Reaktionsgemisch [$kg/m^3$] und |
| $\Delta t_R$ | charakteristische Reaktionszeit [s] |

bedeuten.

Daraus ergibt sich für die Reaktionszone ein Produkt aus Wärmeübergangskoeffizient und volumenspezifischer Wärmeübertragungsfläche von größer als 12500 $W/m^3K$, bevorzugt größer als 50000 $W/m^3K$, besonders bevorzugt größer als 200000 $W/m^3K$ und insbesondere größer als 800000 $W/m^3K$.

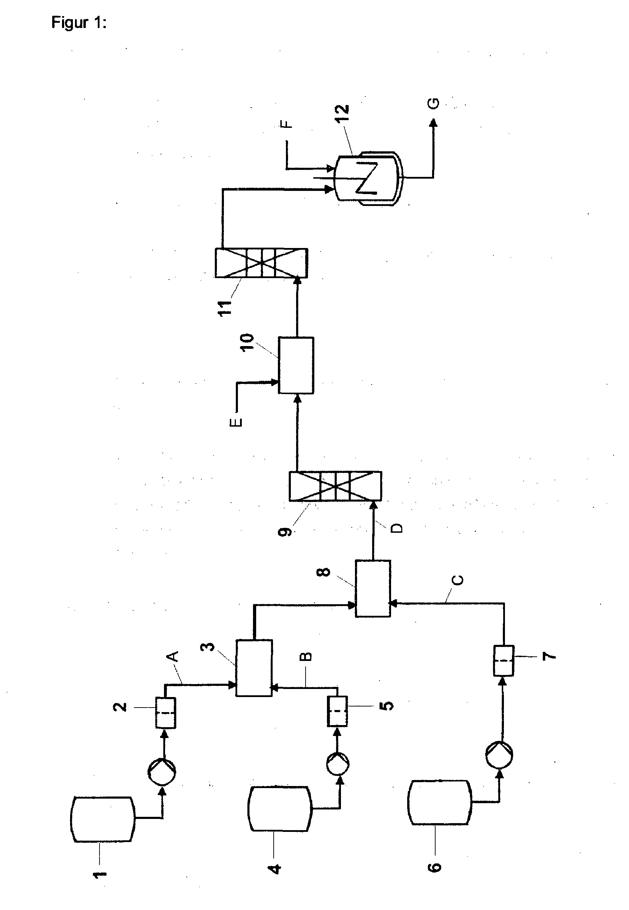

Die erfindungsgemäße Vorrichtung wird anhand der Figur 1 im Folgenden näher erläutert, ohne sie auf diese Ausführungsform einzuschränken. In Figur 1 werden dazu folgende Bezugszeichen verwendet:

| | |
|---|---|
| 1 | Vorlagenbehälter |
| 2 | Filter (optional) |
| 3 | Mischer, optional mit Mikrostruktur |
| 4 | Vorlagenbehälter |
| 5 | Filter (optional) |
| 6 | Vorlagenbehälter |
| 7 | Filter (optional) |
| 8 | Mischer mit Mikrostruktur |

9     mikrostrukturierter Reaktor, temperierbar

10   Mischer, optional mit Mikrostruktur, temperierbar

11   Reaktor, optional mikrostrukturiert, temperierbar

12   Austragsbehälter mit Rührvorrichtung, temperierbar

Die Vorrichtung umfasst zwei Vorlagenbehälter 1 und 4, die die Ausgangsgemische enthalten, sowie einen weiteren Vorlagenbehälter 6 für einen weiteren Ausgangsstoff. Über jeweils eine Zuführung mit Fördereinrichtung und Filter 2 bzw. 5 (jeweils optional) sind die Vorlagenbehälter 1 und 4 mit einem ersten Mischer 3 verbunden. Der Mischer 3 kann gegebenenfalls Mikrostrukturen aufweisen. Dem ersten Mischer 3 schließt sich ein zweiter Mischer 8 mit Mikrostrukturen an. Der Vorlagenbehälter 6 ist über eine Zuführung mit Fördereinrichtung und Filter 7 (optional) ebenfalls mit dem zweiten Mischer 8 verbunden. Die Mischer 3 und 8 können gegebenenfalls zu einer Mischeinheit zusammengefasst sein, die dann mit Mikrostrukturen ausgestattet ist. An den mikrostrukturierten Mischer 8 schließt sich ein temperierbarer Reaktor 9 an, der mit einer Reaktionszone mit Mikrostrukturen ausgestattet ist. An den Reaktor 9 kann sich ein dritter Mischer 10 und daran wieder ein Reaktor 11 anschließen. Sowohl der Mischer 10 als auch die Reaktionszone des Reaktors 11 sind temperierbar und können gegebenenfalls Mikrostrukturen aufweisen. Am ausgangsseitigen Ende der Vorrichtung befindet sich ein temperierbarer Austragsbehälter 12. Der Austragsbehälter 12 ist mit einer einem weiteren Zulauf, einer Rührvorrichtung und einem Auslass ausgestattet.

Das erfindungsgemäße Verfahren lässt sich ebenfalls anhand von Figur 1 veranschaulichen, ohne es auf diese Ausführungsform einzuschränken. Dazu werden zusätzlich folgende Bezugszeichen für die Stoffströme verwendet:

A    Monomeren-Lösungsmittel-Gemisch

B    Initiator-Lösungsmittel-Gemisch

C    Regler

D    Reaktionsgemisch

E    Additive und/oder weitere Initiator-Lösungen

F    weitere Additive

G    Produkt

Ein Monomeren-Lösungsmittel-Gemisch A wird aus einem Vorlagenbehälter 1 mit üblichen Dosier- und Regeleinrichtungen über einen Filter 2 (optional) in einen Mischer 3 geführt. Der Mischer 3 kann optional als Mischer mit Mikrostruktur ausgeführt sein. Ein Initiator-Lösungsmittel-Gemisch B wird aus einem Vorlagenbehälter 4 über übliche Dosier- und Regeleinrichtungen und einen Filter 5 (optional) ebenfalls in den Mischer 3 zugeführt. Im Mischer 3 werden die beiden flüssigen Stoffströme bei Umgebungstemperatur vermischt.

Das aus dem Mischer 3 erhaltene Gemisch (A+B) wird in einen Mischer 8 geführt. Ein Regler C wird aus einem Vorlagenbehälter 6 über übliche Dosier- und Regeleinrichtungen und einen Filter 7 (optional) ebenfalls in den Mischer 8 zugeführt. Der Mischer 8 ist als Mischer mit Mikrostruktur ausgeführt. Beide Stoffströme werden im Mischer 8 bei Umgebungstemperatur zu einem Reaktionsgemisch D vermischt.

Beide Mischvorgänge können alternativ auch gemeinsam in einer Mischvorrichtung (3+8) durchgeführt werden.

An die Mischer 3 und 8 bzw. Mischvorrichtung (3+8) schließt sich ein mikrostrukturierter Reaktor 9 an, der temperierbar ist und bei nahezu konstanter Temperatur, d.h. weitgehend isotherm betrieben wird.

Dem Reaktor 9 kann optional ein dritter temperierbarer Mischer 10 nachgeschaltet werden, um Additive, weitere Initiator-Lösungen etc. (E) zuzugeben. Der Mischer 10 kann gegebenenfalls als Mischer mit Mikrostruktur ausgeführt sein.

Ebenso optional kann dem dritten Mischer 10 ein weiterer temperierbarer Reaktor 11 nachgeschaltet sein. Dieser Reaktor 11 kann gegebenenfalls als mikrostrukturierter Reaktor ausgeführt sein.

Anschließend wird das Produkt in einen temperierbaren Austragsbehälter 12 mit optionaler Rührvorrichtung geleitet. Hier können weitere Additive etc. (F) zudosiert werden. Aus dem Austragsbehälter kann es als Produkt G abgezogen werden.

Die nach dem erfindungsgemäßen Verfahren bzw. unter Einsatz einer erfindungsgemäßen Vorrichtung erhaltenen Polymerisate eignen sich in vorteilhafter Weise für die Anwendung in Waschmitteln, Geschirrreinigern, technischen Reinigern, zur Pigmentdispergierung, zur Wasserbehandlung, und als Ölfeldchemikalien.

Die nach dem erfindungsgemäßen Verfahren bzw. unter Einsatz einer erfindungsgemäßen Vorrichtung erhaltenen Polymerisate eignen sich weiterhin vorteilhaft als Dispergiermittel für Pigmente. Dazu werden bevorzugt anorganische Pigmente wie z.B. Calciumcarbonat, Kaolin, Titandioxid, Zinkoxid, Zirkonoxid, Aluminiumoxid, etc. verwendet. Besonders bevorzugt ist gemahlenes Calciumcarbonat (GCC). Das Ziel ist die Herstellung von wässrigen Suspensionen der oben genannten Pigmente (sogenannte Pigment-Slurries). Zum Dispergieren von Pigmenten, insbesondere von anorganischen Pigmenten, werden vorzugsweise anionische Polymerisate als Dispergiermittel eingesetzt. Dazu zählen speziell Polymerisate auf Basis von Polyacrylsäure und deren Salzen.

Die nach dem erfindungsgemäßen Verfahren bzw. unter Einsatz einer erfindungsgemäßen Vorrichtung erhaltenen Polymerisate sind besonders geeignet zur Herstellung von Calciumcarbonat-Slurries, die einen Feststoffgehalt von mindestens 70 % aufweisen. Vorzugsweise haben in diesen Calciumcarbonat-Slurries 95 % der Teilchen eine Teilchengröße von kleiner als 2 μm und 75 % der Teilchen eine Teilchengröße von kleiner als 1 μm. Durch den Einsatz eines nach dem erfindungsgemäßen Verfahren bzw. unter Einsatz einer erfindungsgemäßen Vorrichtung erhaltenen Polymerisats als Dispergiermittel erfolgt die Dispergierung bzw. Mahlung besonders energieeffizient, und es lässt sich eine gleichmäßige Größenverteilung der Pigmente erreichen. Außerdem kann die Mahldauer reduziert werden, und die resultierende Suspension hat eine niedrige Viskosität. Durch den Einsatz eines geeigneten Dispergiermittels bleibt die Pigment-Slurry langzeitstabil, d.h. der Anstieg der Viskosität mit der Zeit ist sehr gering.

Vorteile der Erfindung

Mischt man Monomer, Initiator und Regler in einer Vorlage vor, um sie gemeinsam einer Reaktionszone zuzuführen, so ist die Mischung selbst bei Raumtemperatur nicht lagerstabil sondern fängt an zu reagieren. Eine solche Reaktionsmischung muss unmittelbar in die Reaktionszone überführt werden.

Alternativ kann man Monomer und einen Initiator entsprechend hoher Zerfallstemperatur bei Umgebungstemperatur einige Zeit gemeinsam bevorraten und den Regler erst unmittelbar vor Reaktionsstart dazu mischen. Initiator und Regler können hingegen in der Regel nicht vorgemischt werden, da sie z.B unter Umständen ein Redoxpaar bilden können und zum vorzeitigen Zerfall (Radikalbildung) neigen, was die gewünschte Aktivität für die Polymerisation bis zur Unwirksamkeit herabsetzt.

Vorteilhafterweise kann man nach dem erfindungsgemäßen Verfahren eine kontinuierliche radikalische Polymerisation bei vergleichsweise sehr niedrigen Temperaturen durchführen.

Das erfindungsgemäße Mischen der Reaktanden im kalten Zustand weist gegenüber den Verfahren aus dem Stand der Technik den Vorteil auf, dass das Mischen und der Reaktionsstart vollständig voneinander getrennt sind. So lassen sich der definierte Reaktionsstart und der erfindungsgemäß temperaturkontrolliert bzw. isotherm geführte Reaktionsverlauf zu einer vorteilhaft engeren Molmassenverteilung kombinieren.

Zudem kann nach dem erfindungsgemäßen Verfahren eine Polymerisation bei vergleichsweise niedrigen Temperaturen und mit vergleichsweise kurzen Verweilzeiten durchgeführt werden.

Zur besseren Abreaktion der Monomere hat sich als vorteilhaft erwiesen, Initiator nachzudosieren bzw. eine Base dazuzugeben und die Säure (teil)zuneutralisieren. Durch die Neutralisation lässt sich die Reaktion stark beschleunigen.

Die erfindungsgemäß erhaltenen Polymere weisen eine engere Molmassenverteilung $M_n/M_w$ als in (semi-)batch-Fahrweise hergestellte Polymere auf.

Durch die niedrige Temperatur ist das Korrosions-Risiko von empfindlichen MikroStrukturen und Werkstoffen sehr gering.

Da die Mischung der Ausgangsstoffe im Wesentlichen bei Umgebungstemperatur stattfindet, ist das Verfahren darüber hinaus sehr energieeffizient.

Bei der Herstellung bestimmter Copolymere führt das Verfahren je nach Reaktivitätsverhältnis der resultierenden Copolymerisationsparameter zu einheitlicher oder über den Reaktionsverlauf sich verändernder Polymerzusammensetzung. Dies kann durch gezieltes Nachdosieren entsprechender Komponenten zumindest teilweise kompensiert werden.

Die Erfindung wird anhand der folgenden, nicht einschränkenden Beispiele näher erläutert.

Beispiele

Verfahrensbeispiel 1:

Eine wässrige Acrylsäure-Lösung (50 Gew.-%) wurde gleichmäßig mit einer wässrigen Natriumpersulfat-Lösung (2 Gew.-%) mittels eines Mikromischer gemischt und nachfolgend gleichmäßig mit einer wässrigen Lösung von 2-Mercaptoethanol (10 Gew.-%) mittels eines zweiten Mikromischer bei Raumtemperatur gemischt. Die entstandene Reaktionslösung wurde durch jeweils eine vorgewärmte, im Ölbad temperierte Reaktionskapillare mit einer konstanten Flussrate gepumpt, wobei die Reaktionskapillaren unterschiedliche Temperaturen; Werkstoffe, Durchmesser und Längen gemäß Tabelle 1 aufwiesen (alle Zuläufe mittels Labor-HPLC-Pumpen, Fa. Bischoff).

In Beispiel 4 wurden davon abweichend eine wässrige 7 gew.-%ige Natriumpersulfat-Lösung und eine wässrige 50 gew.-%ige Lösung von 2-Mercaptoethanol verwendet.

In Beispiel 5 wurden davon abweichend eine wässrige 3 gew.-%ige 2,2'-Azobis[2-(2-imidazolin-2-yl)propan]dihydrochlorid-Lösung (erhältlich z.B. unter der Bezeichnung VA044 von Wako Specialty Chemicals, JP) und eine wässrige 20 gew.-%ige Lösung von 2-Mercaptoethanol verwendet.

Tabelle 1

| Bsp. | Material | Innen-Ø [mm] | Länge [m] | Fluss [g/h] | Initiator [Gew.-%][2] | Regler [Gew.-%][2] | Temperatur [°C] |
|---|---|---|---|---|---|---|---|
| 1 | Edelstahl 1.4571 | 1,0 | 6,4 | 220 | 1 | 5,0 | 130 |
| 2 | Alloy 2.4610 | 0,8 | 10,0 | 220 | 1 | 5,0 | 130 |
| 3 | PEEK | 0,8 | 10,0 | 700 | 1 | 2,7 | 100 |
| 4 | 1.4571 | 1,5x12[*] | 2,0 | 700 | 2 | 5,0 | 80 |
| 5 | 1.4571 | 3 | 10 | 562 | 0,5 | 4,0 | 80 |

[2]: Gew.-% bezogen auf Monomer
[*]: rechteckiger Querschnitt

Die analytischen Daten der in der erfindungsgemäßen Verfahrensweise nach Verfahrensbeispiel 1 hergestellten Polyacrylsäure der Beispiele 1 bis 5 sind in Tabelle 2 aufgelistet.

Tabelle 2

| Bsp. | FG [%] | $M_n$ [g/mol] | $M_w$ [g/mol] | PDI $M_w/M_n$ | Rest-AS [ppm] | Aussehen |
|---|---|---|---|---|---|---|
| 1 | 40 | 2900 | 5800 | 2,0 | | farblos, klar, viskos |
| 2 | 40 | 2500 | 5500 | 2,2 | | farblos, klar, viskos |
| 3 | 35 | 4900 | 11500 | 2,3 | | farblos, klar, viskos |
| 4 | 40 | 3500 | 6600 | 1,9 | 230 | farblos, klar, viskos |
| 5 | 40 | 3400 | 6900 | 2,0 | <20 | farblos, klar, viskos |

Verfahrensbeispiel 2:

Die wässrige Lösung von Acrylsäure und 2-Acrylamido-2-methylpropansulfonsäure (35:15 Gew.-%) wurde einem Mikromischer kontinuierlich und gleichmäßig mit einer wässrigen Natriumpersulfat-Lösung (4 Gew.-%) zugeführt, darin vermischt und nachfolgend gleichmäßig mit einer wässrigen Lösung von Natriumhypophosphit (10 Gew.-%) in einem zweiten Mikromischer bei Raumtemperatur gemischt. Die entstandene Reaktionslösung wurde durch eine im Ölbad temperierte Reaktionskapillare kontinuierlich mit einer definierten Flussrate gepumpt, wobei die Reaktionskapillaren unterschiedliche Temperaturen, Werkstoffe, Durchmesser und Längen gemäß Tabelle 3 aufwiesen.

Tabelle 3

| Bsp. | Material | Innen-Ø [mm][1] | Länge [m][1] | Fluss [g/h] | Initiator [Gew.-%][2] | Regler [Gew.-%][2]* | Temperatur [°C] |
|---|---|---|---|---|---|---|---|
| 1 | Edelstahl 1.4571 | 1,6 + 3,0 | 10+10 | 730 | 2 | 5 | 80 |
| 2 | Edelstahl 1.45711. | 1,6 + 3,0 | 10+10 | 830 | 2 | 5 | 80 |

[1] x+y bedeutet: In der ersten Kapillare betrug der Innendurchmesser x mm bzw. die Länge x m und in der sich direkt anschließenden zweiten Kapillare betrug der Innendurchmesser y mm bzw. die Länge y m.
[2]: Gew.-% bezogen auf Monomer

Das nach der erfindungsgemäßen Verfahrensweise hergestellte Copolymer der Beispiele 1 und 2 durch Verfahrenbeispiel2 wies analytische Daten auf, die in Tabelle 4 aufgelistet sind.

Tabelle 4

| Beispiel | FG [%] | $M_n$ [g/mol] | $M_w$ [g/mol] | PDI $M_w/M_n$ | Rest-AS [ppm] | Aussehen |
|---|---|---|---|---|---|---|
| 1 | 40 | 25000 | 230000 | 9,2 | 1200 | |
| 2 | 40 | 9000 | 38900 | 4,3 | <20 | |

Anwendungsbeispiel:

Mahlen von Calciumcarbonat

Ziel ist die Herstellung hochkonzentrierter Slurries von Calciumcarbonat in Wasser mit möglichst kleiner Teilchengröße, die über einen langen Zeitraum eine möglichst geringe Viskosität haben.

Verwendete Geräte:

Dispermat AE (Firma VMA Getzmann), Doppelmahlscheibe DMS 70, Zirkonoxidperlen, temperierbares Doppelwandgefäß (Inhalt 1 Liter), Glasperlen mit Durchmesser ca. 1 mm;
Teilchengrößenbestimmung mit Horiba LA 920;
Viskositätsmessung mit Brookefield-Viskosimeter DS

Durchführung der Mahlversuche:

300 g Calciumcarbonatpulver (mittlerer Teilchendurchmesser 10 $\mu$m) werden mit 711 g Glasperlen vermengt und trocken in das Doppelwandgefäß bei abgesenkter Mahlscheibe eingefüllt. Eine wässrige Lösung des zu untersuchenden Polymers (ca. 45 ml) wird anschließend zugegeben und bei langsamer Drehzahl damit gleichförmig vermengt. Die Polymermenge wird so berechnet, dass die Konzentration des Polymeren (fest) bezogen auf Calciumcarbonat (fest) 1,0 Gew.-% beträgt. Ist die Masse homogen, so wird die Drehzahl auf 4000 Upm erhöht und 110 Minuten lang gemahlen. Während dieser Zeit ist es erforderlich, schrittweise ca. 100 ml Wasser zuzugeben, um eine gute Durchmischung und Fließfähigkeit sicherzustellen. Das Doppelwandgefäß wird während des Versuchs mit 5 °C kaltem Kühlwasser durchströmt, um die reibungsbedingte Erwärmung des Mahlgutes zu reduzieren.
Nach Beendigung der Mahlung werden die Glasperlen über ein 780 Mikrometer Filtergewebe abgetrennt und die entstandene Slurry aufgefangen.
Alle zu untersuchenden Slurries werden nun auf einen einheitlichen Feststoffgehalt von 73,0 % eingestellt (durch Zugabe von Wasser oder durch Verdampfen von Wasser). Nach dem Einstellen der Konzentration werden die Proben über Nacht stehen gelassen, um ins Gleichgewicht zu kommen. Am nächsten Tag werden sie mit einem Ultraturrax-Rührer (12000 Upm) 1 Minute lang aufgerührt. Dies ist der Startpunkt der Viskositätsbestimmung. Es wird die Viskosität der Slurry sofort, nach einer Stunde, nach 24 Stunden und nach 1 Woche bestimmt. Die Teilchengröße wird mittels Lichtstreuung ermittelt.
Die Standardpolymere 1 und 2 sind Homopolymere der Acrylsäure und wurden im klassischen Semibatch-Verfahren hergestellt.
Alle untersuchten Polymere lagen vollständig neutralisiert (pH = 8) als wässrige Lösung des Natriumsalzes vor.

Tabelle 5: Untersuchte Polymere

| Beispiel | $M_n$ [g/mol] | $M_w$ [g/mol] | PDI $M_w/M_n$ |
|---|---|---|---|
| Standardpolymer 1 | 2.800 | 6.900 | 2,5 |
| Standardpolymer 2 | 1.450 | 2.570 | 1,8 |
| Erfindungsgemäßes Polymer (Tab. 2, Bsp. 5) | 3400 | 6900 | 2,0 |

Tabelle 6: Viskosität der Slurry gegen Lagerzeit

| | Festgehalt Slurry [%] | Teilchengrößen-Anteil [%] | | Viskosität [mPas] | | | |
|---|---|---|---|---|---|---|---|
| | | <1 $\mu$m | <2 $\mu$m | sofort | nach 1 h | nach 24 h | nach 168 h |
| Standardpolymer 1 | 73,0 | 82 | 93 | 216 | 908 | 1206 | 1405 |
| Standardpolymer 2 | 73,0 | 82 | 90 | 501 | 1300 | 1600 | 2070 |
| Erfindungsgem. Polymer (Tab. 2, Bsp. 5) | 73,0 | 98,2 | 100 | 242 | 393 | 564 | 982 |

Aus dem Beispiel geht hervor, dass bei Verwendung des erfindungsgemäßen Polymers die geringsten Teilchengrößen und niedrigste Viskosität erreicht werden können.

**Patentansprüche**

1.  Verfahren zur kontinuierlichen Herstellung eines Polymerisats durch radikalische Lösungs- oder Masse-Polymerisation, umfassend folgende Schritte:

    (a) Bereitstellen von wenigstens zwei flüssigen Strömen, wobei die wenigstens zwei flüssigen Ströme jeweils eine oder mehrere der folgenden Komponenten umfassen:

    ein radikalisch polymerisierbares Monomer,
    einen Regler ausgewählt unter als Regler wirkenden Lösungsmitteln und davon verschiedenen Reglern und
    einen Initiator,
    mit der Maßgabe, dass der den Initiator enthaltende Strom nicht auch den Regler enthält,

    (b) Vermischen der wenigstens zwei flüssigen Ströme unter Erhalt eines Reaktionsgemisches, wobei das Vermischen der flüssigen Ströme mindestens 20 °C unterhalb der Reaktionstemperatur der nachfolgenden Polymerisation erfolgt und wobei wenigstens ein Mischer mit Mikrostrukturen eingesetzt wird, und
    (c) radikalische Polymerisation des in Schritt (b) erhaltenen Reaktionsgemisches in wenigstens einer mikrostrukturierten Reaktionszone mit einer charakteristischen Dimension von höchstens 4 mm.

2.  Verfahren nach Anspruch 1, wobei in Schritt (a) die folgenden Ströme bereit gestellt werden:

    (1) wenigstens ein flüssiger Strom, der mindestens ein radikalisch polymerisierbares Monomer enthält,
    (2) wenigstens ein flüssiger Strom, der mindestens einen Initiator enthält, und
    (3) wenigstens ein flüssiger Strom, der mindestens einen Regler enthält.

3.  Verfahren nach einem der Ansprüche 1 oder 2, wobei das Vermischen der flüssigen Ströme in Schritt (b) einstufig in einem Mischer mit Mikrostrukturen erfolgt.

4.  Verfahren nach einem der Ansprüche 1 oder 2, wobei das Vermischen der flüssigen Ströme in Schritt (b) mehrstufig erfolgt, wobei zumindest der in Strömungsrichtung letzte Mischer vor Eintritt in die Reaktionszone(n) ein Mischer mit Mikrostrukturen ist.

5.  Verfahren nach einem der Ansprüche 1 bis 4, wobei die Polymerisation in Schritt (c) in zwei oder mehr als zwei Stufen erfolgt.

6.  Verfahren nach Anspruch 5, wobei zwischen wenigstens zwei der Polymerisationsstufen wenigstens ein zusätzlicher Strom zugeführt wird.

7.  Verfahren nach einem der vorhergehenden Ansprüche, wobei zur Polymerisation als Monomer eine monoethylenisch ungesättigte Carbon- oder Sulfonsäure oder ein Monomergemisch, das wenigstens eine monoethylenisch ungesättigte Carbon- oder Sulfonsäure enthält, eingesetzt wird.

**Claims**

1.  A process for continuously preparing a polymer by free-radical solution polymerization or bulk polymerization, comprising the following steps:

    (a) providing at least two liquid streams, said at least two liquid streams each comprising one or more of the following components:

    a free-radically polymerizable monomer,
    a regulator selected from solvents which act as regulators and regulators different therefrom, and
    an initiator,

with the proviso that the stream comprising the initiator does not also comprise the regulator,

(b) mixing said at least two liquid streams to obtain a reaction mixture, the liquid streams being mixed at least 20°C below the reaction temperature of the subsequent polymerization and at least one mixer with microstructures being used, and
(c) free-radically polymerizing the reaction mixture obtained in step (b) in at least one microstructured reaction zone having a characteristic dimension of at most 4mm.

2. The process according to claim 1, wherein the following streams are provided in step (a):

(1) at least one liquid stream which comprises at least one free-radically polymerizable monomer,
(2) at least one liquid stream which comprises at least one initiator, and
(3) at least one liquid stream which comprises at least one regulator.

3. The process according to either of claims 1 and 2, wherein the liquid streams are mixed in step (b) in one stage in a mixer with microstructures.

4. The process according to either of claims 1 and 2, wherein the liquid streams are mixed in step (b) in more than one stage, in which case at least the last mixer in flow direction before entry into the reaction zone(s) is a mixer with microstructures.

5. The process according to any one of claims 1 to 4, wherein the polymerization in step (c) is effected in two or more than two stages.

6. The process according to claim 5, wherein at least one additional stream is supplied between at least two of the polymerization stages.

7. The process according to any one of the preceding claims, wherein the polymerization is effected by using as a monomer a monoethylenically unsaturated carboxylic acid or sulfonic acid or a monomer mixture which comprises at least one monoethylenically unsaturated carboxylic acid or sulfonic acid.

**Revendications**

1. Procédé pour la préparation continue d'un polymère par polymérisation par voie radicalaire en solution ou en masse, comprenant les étapes suivantes :

(a) préparation d'au moins deux flux liquides, les au moins deux flux liquides comprenant à chaque fois un ou plusieurs des composants suivants :

un monomère polymérisable par voie radicalaire,
un agent de régulation choisi parmi les solvants agissant comme agent de régulation et les agents de régulation différents de ceux-ci et un initiateur,
à condition que le flux contenant l'initiateur ne contienne pas aussi l'agent de régulation,

(b) mélange des au moins deux flux liquides avec obtention d'un mélange réactionnel, le mélange des flux liquides ayant lieu au moins 20°C sous la température de réaction de la polymérisation consécutive et au moins un mélangeur présentant des microstructures étant utilisé et
(c) polymérisation par voie radicalaire du mélange réactionnel obtenu dans l'étape (b) dans au moins une zone de réaction microstructurée présentant une dimension caractéristique d'au plus 4 mm.

2. Procédé selon la revendication 1, les flux suivants étant préparés dans l'étape (a) :

(1) au moins un flux liquide, qui contient au moins un monomère polymérisable par voie radicalaire,
(2) au moins un flux liquide, qui contient au moins un initiateur et
(3) au moins un flux liquide, qui contient au moins un agent de régulation.

3. Procédé selon l'une quelconque des revendications 1 ou 2, le mélange des flux liquides dans l'étape (b) ayant lieu dans un étage dans un mélangeur présentant des microstructures.

4. Procédé selon l'une quelconque des revendications 1 ou 2, le mélange des flux liquides dans l'étape (b) ayant lieu dans plusieurs étages, au moins le dernier mélangeur dans le sens d'écoulement, avant l'entrée dans la/les zone(s) de réaction, étant un mélangeur présentant des microstructures.

5. Procédé selon l'une quelconque des revendications 1 à 4, la polymérisation dans l'étape (c) ayant lieu dans deux ou plus de deux étages.

6. Procédé selon la revendication 5, au moins un flux supplémentaire étant introduit entre au moins deux des étages de polymérisation.

7. Procédé selon l'une quelconque des revendications précédentes, un acide carboxylique ou sulfonique éthyléniquement monoinsaturé ou un mélange de monomères qui contient au moins un acide carboxylique ou sulfonique éthyléniquement monoinsaturé étant utilisé comme monomère pour la polymérisation.

Figur 1:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9954362 A
- WO 03037501 A
- DE 19816886

**In der Beschreibung aufgeführte Nicht-Patentliteratur**

- **K. C. BERGER ; G. BRANDRUP.** Polymer Handbook. John Wiley & Sons, 1989, II/81-II/141
- **M. BAERNS ; H. HOFMANN ; A. RENKEN.** Chemische Reaktionstechnik, Lehrbuch der Technischen Chemie. vol. 1, 332
- **M. BAERNS ; H. HOFMANN ; A. RENKEN.** Chemische Reaktionstechnik, Lehrbuch der Technischen Chemie. vol. 1, 339 ff